# EUROPEAN PATENT APPLICATION

(11) **EP 0 950 912 A2**
(43) Date of publication of application: **20.10.1999**
(21) Application number: 99302448.8
(22) Date of filing: 29.03.1999
(51) Int. Cl.: G02B 27/00, G02B 15/10, H04N 5/225, G03B 5/00

(54) **Image forming apparatus with intermediate image surface**

(30) Priority: 16.04.1998 GB 9808073
(71) Applicant: Abakus Scientific Limited, Market Harborough, Leicestershire LE16 8LA (GB)
(72) Inventor: Pollitt, Kenneth R., c/o Abakus Scientific Ltd., Market Harborough,Leicestersh.LE16 8LA (GB); Langley, Kath, c/o Abakus Scientific Ltd., Market Harborough,Leicestersh.LE16 8LA (GB)
(74) Representative: Beresford, Keith Denis Lewis

(57) **Abstract**

There is described an image forming apparatus wherein a first optical system forms a real image on an intermediate image surface, and a second optical system forms a final image using the real image as its object. The final image is formed on an image capture medium or device, such as a photographic film or video camera sensor. There is also described a lens adaptor for fitting to a conventional video or cine camera between the conventional lens and the camera body, the adaptor comprising an intermediate image plane on which the camera's conventional lens forms a real image, and a second optical system which forms the final image on the film or video camera sensor, using the real image as its object. A camera including such a lens system, or a lens and adaptor is also described.

## Description

The present invention relates to image forming apparatus, and is particularly concerned with the capture of images with improved image characteristics as video signals or on film.

GB patent 2255198B describes the use of a fibre optic plate to correct spherical distortion of an image plane (field curvature). A fibre optic plate is a planar array of light conducting fibres wherein the array has two principal surfaces (input and output) and the fibres extend from the input surface to the output surface in a parallel arrangement. In an optical system having a single imaging element, the fibre optic plate is arranged to have a spherical input surface positioned to coincide with the spherical image plane of the imaging element and a planar output surface. The result is that the spherical-plane image is reproduced at the output surface of the plate as an image formed in a flat image plane.

There is also described an optical system having two imaging elements, each of which produces a spherical image plane from a flat object plane. To correct this distortion, which would otherwise accumulate through the lens system, a fibre optic plate having concave input and output surfaces is placed between the imaging elements. The input surface of the fibre optic plate is arranged to coincide with the spherical image plane of the first imaging element, and the concave output surface of the fibre optic plate provides an image in a spherical image plane to the second imaging element such that the distortion caused by the second imaging element returns the image to a flat plane. While other methods of correcting distortion of the image plane are acknowledged to be known, such as by adding corrective lenses to the optical system, such lenses may introduce further distortions and abberations.

GB 2255198B discloses optical systems where an image in an image plane of a first imaging element has its image plane distorted and then serves as the object for a second imaging element, in order to improve the image characteristics by correcting for lens defects.

Likewise, only the use of a fibre optic plate with at least one spherical surface is disclosed for the correction of image plane distortion by a lens or imaging element.

The present invention sets out to provide a camera user with a greater range of combinations of image characteristics than has hitherto been available with conventional lens systems.

In photographic as well as video cameras, there exists a known relationship between the focal length of the camera lens, the size of the image formed in the image plane, the entrance pupil of the lens, and the depth of field of the captured image. The entrance pupil of the lens is usually described as the image of the aperture stop in the lens, viewed from the object side. The first of these factors is generally fixed by the choice of lens in that the focal length is determined by the angle of view required for the image. In conventional zoom lenses the angle of view is varied by using the "zoom" control, which adjusts the focal length of the lens. A short focal length gives a wide angle of view, whereas a long focal length gives a narrow angle of view.

The dimensions of the required image are set by the recording medium being used so that the largest area of available film is covered by the image and greatest detail is captured. The iris or aperture diameter is determined by the available light level and the light requirements of the recording medium. In still photography, the aperture must be large enough to admit sufficient light to expose the film to the correct degree in the time the shutter is open. When video recording is considered, the aperture must be large enough to admit sufficient light to activate the camera's sensor.

At a constant level of ambient light, and assuming a constant image size, a reduction in the viewing angle achieved by "zooming in" on a subject results in less light from the subject entering the lens to be focused on the film or sensor. The entrance pupil of the lens is widened to compensate for this decrease, and the depth of field of the image is reduced as the entrance pupil is increased. In some circumstances the interaction between these governing factors can lead to an unacceptable limiting of the available depth of field of the image, so that focusing on the subject of the image becomes critically important.

As an example, in a situation where a narrow field of view is required for dramatic effect or to emphasise a particular object, the need to produce an image of the size necessary for a television camera CCD can mean that the depth of field is inappropriate for the aesthetic effect required, or is simply insufficient to accommodate the objects required to be simultaneously in focus. In a studio environment, lighting of the subject can be increased to allow the aperture to be reduced and greater depth of focus obtained, but where ambient light is to be used, such as for outside broadcasting or locating filming it may not be possible to provide sufficient additional illumination to achieve a desired depth of focus.

The limitations imposed on a film-maker by the available equipment can thus be considered to stem from the need to produce a final image of a given size, irrespective of the angle of view. Control of the aperture is achievable by adjusting light levels in the studio, but for television outside broadcast work for example no such control is generally available, and thus the range of available apertures, and consequently the depth of field, are limited.

To address the limitations of the prior art, the present invention seeks to provide a lens system which allows a cameraman to expand the range of combinations of depth of field and viewing angle available, while maintaining the size of the final image compatible with the image capture medium, be it photographic film or an electronic sensor.

According to a first aspect of the invention, there is provided an image forming apparatus comprising a first optical system including adjustable optical elements for varying viewing parameters of the optical system for forming images of a first image size and having different depths of focus on a first image surface, and a second optical system which has as its object the first image, and which is capable of forming at a second image plane a second image of a size different from the first image but preserving the depth of focus of the first image.

According to a second aspect of the invention, there is provided a lens adaptor for a camera having a camera body having an image capture element and a lens attachable to the camera body by cooperable mounting portions on the lens and body, the lens adaptor comprising an intermediate image forming element and an optical system and including coupling portions cooperable with the mounting portions of the camera and the lens respectively, the arrangement being such that the adaptor is attachable to the camera body and the lens is attachable to the adaptor so that the lens is capable of forming an intermediate image having a depth of focus on the intermediate image forming element of the adaptor, and the optical system of the adaptor is capable of forming a final image having the same depth of focus on the image capture element of the camera.

A third aspect of the invention provides a lens system for a camera, comprising a first lens system having adjustable angle of view and aperture, an intermediate image forming element, and a second lens system having variable magnification, wherein the first lens system is capable of forming images having different depths of focus on the intermediate image forming element, and the second lens system is capable of forming a final image of a predetermined size from the first image, and preserving the depth of focus of the first image in the final image.

The second optical system thus has a plane image as its object, and the final image can be sharply focused on the film or sensor serving as the image capture element of the camera, since the object of the second optical system has no "depth".

According to a fourth aspect of the invention, a method of forming a final image having a predetermined viewing angle and depth of field on an image plane of a predetermined size comprising the steps of:
forming an intermediate image having an angle of view and a depth of field on an intermediate image surface by means of a first optical system; and
forming a final image by magnifying the intermediate image in a second optical system to form a final image of the predetermined size on an image capture element.

Preferably the first optical system includes a conventional 35mm cine lens, but any suitable optical system may be used. Light control apertures are provided in the first and the second optical systems. Variable apertures may be used, or a suitable aperture may be selected from a plurality of different fixed apertures.

The aperture in the first optical system is used only to control the depth of field of the intermediate image, while the aperture in the second optical system controls the brightness of the final image. Since the object of the second optical system has no depth but is simply a plane pattern, then variation in the aperture of the second optical system has no effect on depth of field in the final image. The final image is simply a magnified or reduced version of the intermediate image, with its size adjusted to suit the film or sensor array being used to capture the final image.

In an advantageous development of the invention, the intermediate image is formed by the first optical system on an entry plane of a coherent fibre optic bundle, and the exit plane of the fibre optic bundle forms the "object" for the second optical system. The fibre optic bundle may be composed of relatively short fibres to produce a planar plate-like structure with fibres extending generally perpendicularly to the plane of the plate. Alternatively the fibre optic bundle may be elongate and optionally flexible, allowing the first optical system to be directed at a subject without necessarily moving the second optical system or camera body.

In yet a further development, the fibre optic bundle may be composed of fibres whose aspect ratio changes along their lengths, so that the shape of the entry plane of the bundle is different from the shape of the exit plane. For example, the entry plane may have an aspect ratio corresponding to a "wide screen" cinema picture, while the exit plane of the bundle may have an aspect ratio corresponding to a frame of cine film.

Embodiments of the invention will now be described in detail, with reference to the accompanying drawings, in which:
Figure 1 is a schematic view showing an image forming apparatus according to a first embodiment of the invention;
Figure 2 is a schematic view of a second embodiment of the invention;
Figure 3 is a schematic sectional view of a camera having a lens according to the present invention;
Figure 4 is a schematic sectional view of a lens adapter; and
Figure 5 shows a schematic sectional view of an adaptor mounted between a lens and a camera body.
Figures 6A, 6B and 6C are perspective and sectional views, respectively, of an anamorphic fibre optic plate.

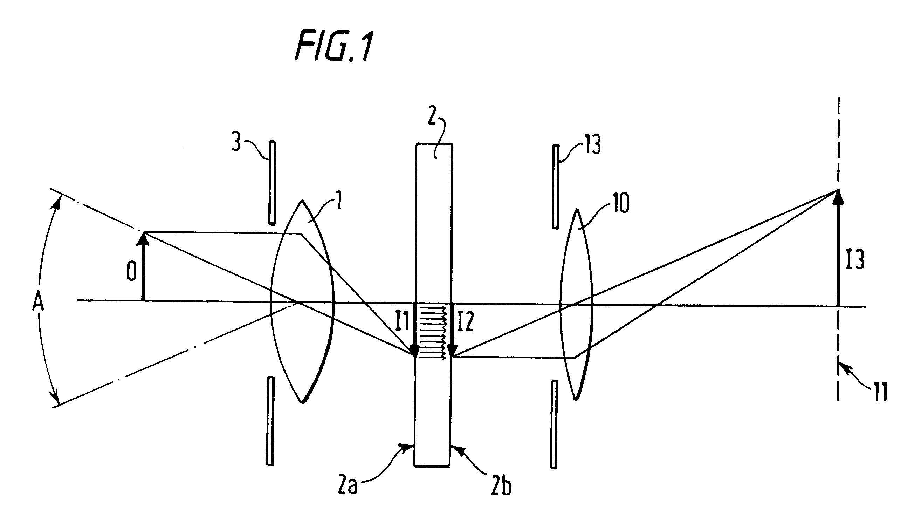

Figure 1 shows schematically an image forming apparatus in which a first optical system 1 forms a first image I1 of an object 0 on an image surface 2. The image surface 2 has a front face 2a on which the first image I1 is formed, and a rear face 2b. The image surface 2 is constructed so that the image I1 is visible through the rear face 2b as an image I2.

A second optical system 10 receives light from the image I2, and forms a final image I3 of the intermediate image I2 in a final image plane 11. The optical systems 1 and 10 may be of fixed or variable focal length, and variable apertures of irises 3 and 13 are associated with the optical systems 1 and 10 respectively.

The image surface 2 may be a translucent element such as a ground glass plate, a glass plate with a translucent coating, or other material which allows an image formed by light incident on its front face to be visible through its rear face. In a preferred embodiment, the image surface 2 is a fibre-optic face plate formed from a plurality of parallel optical fibres extending perpendicularly to the plane of the plate 2, i.e. parallel to the optical axis of the first optical system 1. The image I1 is formed in the plane of a front face 2a of the plate 2 containing one of the ends of each of the optical fibres. Each fibre transmits a "pixel" of the image from the front face 2a of the plate 2 to the rear face 2b, so as to form the image I2 in the plane of the rear face 2b. It will be appreciated that the face plate 2 may have a finite thickness between the front and rear faces 2a and 2b, and where a parallel or coherent and flexible bundle of optical fibres connects planes 2a and 2b, there is no requirement for the optical axes of the first and second optical systems 1, 10 to be coincident, provided that the front face 2a is aligned with first optical system 1 and the rear face 2b is aligned with second optical system 10. The fibres of the face plate 2 may be twisted so that the image I2 is inverted with respect to the image I1. Alternatively, an erecting prism or other erecting optical system may be placed in the light path, either before or after the intermediate image surface 2, to ensure that the final image has the desired orientation. The front face 2a of the fibre optic plate may be curved to coincide with the image plane of the first optical system. Preferably the faces of the optical plate 2 are planar, since lens systems are conventionally produced so as to generate planar images.

Considering the first optical system 1, the user will select the object whose image is to be captured, and will then selected the viewing angle A for the shot. the optical system 1 is then adjusted to form the image I1 on the image surface 2a, and it will be understood that the size of the image I1 is governed by the viewing angle A and the distance from the optical system 1 to the image surface 2a. If the optical system 1 is a fixed focal length lens, such as a 35mm cine lens, then altering the viewing angle A will cause the image size to vary. As the viewing angle is decreased, lighting on the object must be increased, or the aperture 3 or entrance pupil must be widened to preserve the light level at the image I1, and the depth of field decreases as the iris or aperture 3 opens. This means that when the iris is wide open to admit the maximum amount of light, only objects close to the object O will be in sharp focus in the image I1. The depth of field can be increased by closing the iris 3, but this reduces the brightness of the image I1.

The image I1 is transmitted through the face plate 2 by the aligned fibres, and is seen by the second optical system 10 as a plane object I2. The image I2 is exactly the same as I1, preserving the depth of field and the focus distance of the image I1. Optical system 10 enlarges or reduces this image I2 to form a final image I3 of the required size to fill the image receptor of the camera. The image receptor may be a photographic film, or the CCD sensor of a television or video camera.

The final image I3 captured to film or in the CCD thus has image characteristics selected by the cameraman using the first optical system 1 and aperture 3 as regards focus, depth of field, angle of view and brightness, but is magnified or reduced to the required size for recording or electronic capture by the second optical system 10 without changing any of the selected characteristics. The cameraman is thus no longer constrained by the need to produce an image of the required size using the first optical system, and is free to combine angles of view and depth of field to form images previously unavailable.

Specifically, under constant lighting conditions, the cameraman can increase the opening of aperture 3 to reduce the depth of focus of the intermediate image while increasing its brightness, and simultaneously close the aperture 13 to ensure that the amount of light reaching the film or CCD produces the correct exposure. The cameraman thus has at his disposal a greater choice of image parameters, since he can chose to reduce the depth of focus of the image to a degree beyond that possible by, say, opening the aperture and shortening the exposure time in a conventional camera.

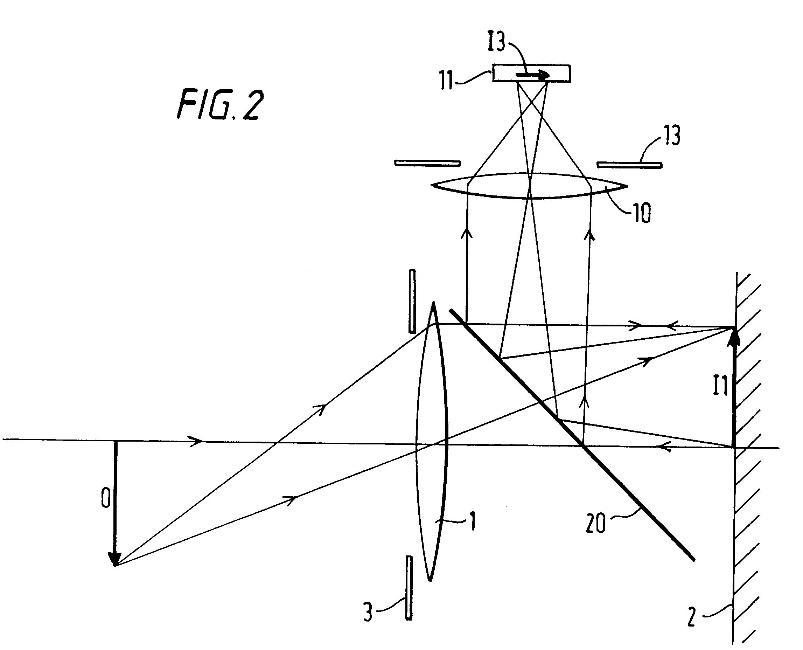

Referring now to Figure 2, there is shown an alternative embodiment of an image forming apparatus, in which the elements corresponding to elements illustrated in Figure 1 are given like reference numbers.

An object O is imaged on an intermediate image surface 2 by a first optical system 1, to form an intermediate image I1. Between the optical system 1 and the image surface 2, a half-reflecting mirror 20 is placed so as to allow light from the object 0 to be focused on the image surface 2 to form the intermediate image I1. Light from the image I1 is reflected by the mirror 20 upwardly (as seen in the Figure) and is focused by a second optical system 10 on to a final image receptor 11 as a final image I3. Although shown in the figure as reflecting the light upwardly, the mirror 20 may reflect the light horizontally or downwardly depending on the structural requirements of the system.

The functioning of this embodiment corresponds to that described in relation to Figure 1, with the difference only that the intermediate image I1 is not transmitted through the intermediate image surface 2, but forms a real image thereon. The image surface 2 is preferably a planar matt surface, and may be a smooth surface treated with a translucent matt coating. The coating may be phosphorescent or fluorescent to improve image brightness. The image I1 serves directly as the object for the second optical system 10, the light path from the image I1 to the optical system 10 being folded by the mirror 20. The reflecting surface 20 may be a surface of a prism, or any suitable reflector. The image surface 2 is preferably planar, but may be curved to coincide with a curved image plane of the first optical system 1. Concave curvature of the surface 2 may serve to correct image plane distortion of both optical systems 1 and 10, to ensure a planar final image I3.

Apertures 3 and 13 operate in the same way as described above, the aperture 3 controlling the depth of field and brightness of image I1, and the aperture 13 controlling brightness only of the image I3.

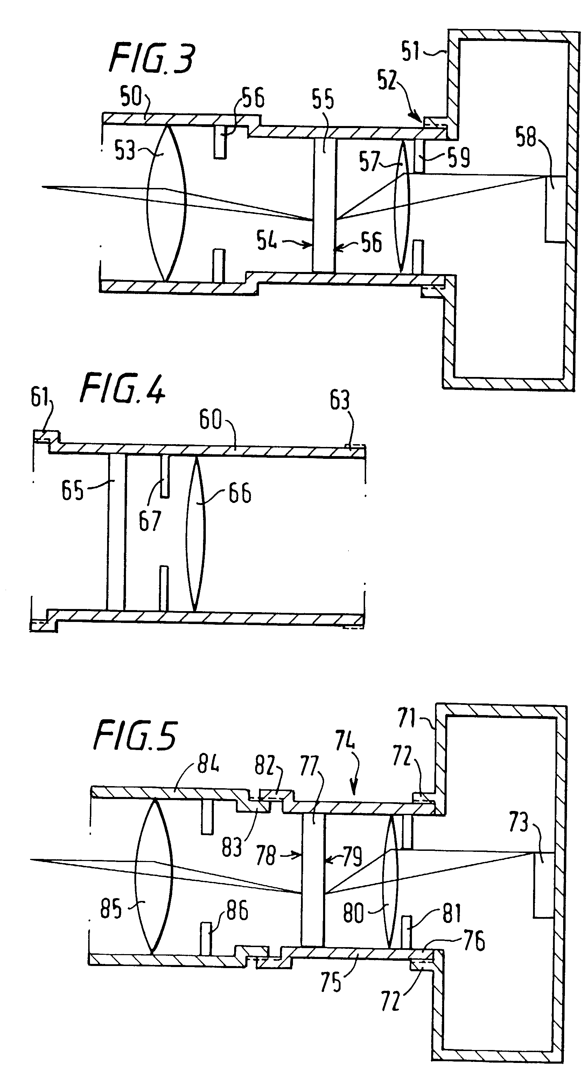

In figure 3 a lens system for a camera is seen schematically in axial cross-section. The lens comprises a lens barrel 50, mounted to a camera housing 51 by a conventional mounting arrangement 52. The mounting arrangement 52 is shown schematically in the figure, but may be any conventional mounting such as a screw thread or a bayonet connection.

In the lens barrel 50, an objective lens 53 is mounted to constitute the "first optical system" of the lens. The objective lens 53 is preferably a zoom lens, but may be a lens of fixed focal length. An object in the field of view of the lens 53 is focused onto the front or entry face 54 of a fibre optic plate 55. An adjustable aperture 56 between the objective lens 53 and the fibre optic plate 55 allows the operator to adjust the brightness and depth of field of the image formed on the entry face 54 of the fibre optic plate 55.

The image formed on the entry face 54 of the fibre optic plate 55 is transmitted by the optical fibres of the plate 55 to the rear or exit face 56 of the fibre optic plate 55, where it forms an "intermediate image" as described above. The "intermediate image" is the object for a second lens 57 mounted in the lens barrel 50. The second lens 57 forms a final image by focusing the "intermediate image" on to the image capture element 58 of the camera. An adjustable aperture 59 is mounted adjacent the second lens 57, either in front of or behind the lens 57. The adjustable aperture 59 is operable to regulate the brightness of the final image, to ensure correct exposure. The image capture element 58 of the camera may be a photographic film, or a CCD device for capturing images electronically.

Figure 4 shows a schematic view, in axial section, of an adapter for converting a conventional camera to use the optical system of the invention. In a conventional camera, the camera body has a female mounting portion and the lens barrel has a male mounting portion cooperable therewith to attach the lens to the camera body. The adapter of figure 4 comprises a barrel 60 having at a front end 61 a female mounting portion 62 cooperable with the male mounting portion of a conventional lens, and at a rear end 63 a male mounting portion 64 cooperable with the female mounting portion of a conventional camera body.

Within the adapter barrel 60 is mounted a fibre optic plate 65 adjacent the front end 61, and a second lens 66 adjacent the rear end 63. An adjustable aperture 67 is mounted adjacent the second lens 66, and may be positioned either in front of or behind the lens. In the illustrated embodiment, the aperture 67 is in front of the lens 66. The dimensions of the barrel specifically the axial spacing between the fibre optic plate 65 and the female mounting portion 62, are such that when the adapter is attached to a conventional lens, the lens forms an image on the front or entry face 68 of the fibre optic plate 65. Likewise, the axial spacing between the second lens 66 and the male mounting portion 64 of the adapter is such that when the adapter is attached to a conventional camera body, the second lens 66 forms a final image on the image capture element of the camera body.

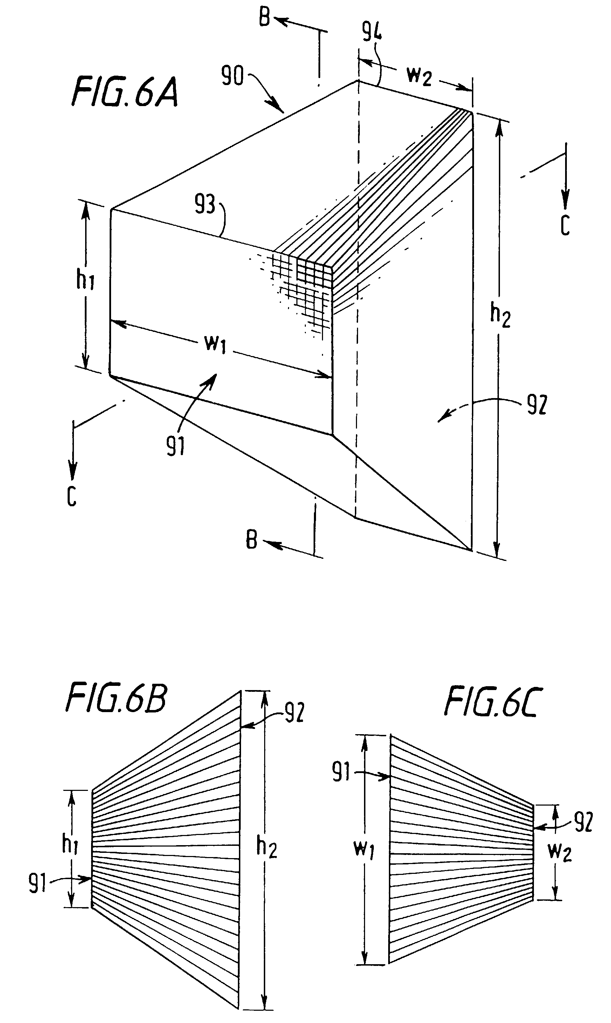

Figure 5 is a view similar to Figure 3, showing an adaptor mounted to a camera and lens for use. The camera has a body 71 with a female mounting portion 72 aligned with an image capture element 73. The adaptor 74 has a barrel 75 with a male mounting portion 76 cooperable with the female mounting portion 72 of the camera body 71.

Within the barrel 75 is a fibre optic plate 77 having a front face 78 and a rear face 79. A lens 80 is positioned behind the fibre optic plate 79, and an adjustable aperture 81 is positioned behind lens 80.

The front end of the barrel 75 is formed with a female mounting portion 82, which accepts the male mounting portion 83 of a lens barrel 84. The lens barrel 84 accommodates a lens 85 and an adjustable aperture 86.

The dimensions of the adaptor 74 are such that the lens 85 forms an image on the front face 78 of fibre optic plate 77, and the lens 80 forms an image of the rear face 79 of fibre optic plate 77 on to the image receptor 73 of the camera body.

The operation of the lens and adaptor is as described in relation to the optical system of Figure 1 and the lens of Figure 3.

It is foreseen that the image forming surface 2 or the front or rear face of the fibre optic plate may be provided with a phosphorescent coating sensitive to emit visible light when struck by invisible radiation such as infra-red or ultra-violet radiation, so that invisible radiation captured by the first optical system 1 may form a "visible" image I1 which may then be captured as a final visible light image I3.

The image forming apparatus may be provided as a complete lens apparatus as seen in Figure 3, including the first and second optical systems and the intermediate image forming member, for fitting to a conventional camera body.

Alternatively, the intermediate image forming member and the second optical system may be provided as an "adaptor" as seen in Figure 4 for fitting between a conventional lens, such as a 35mm cine lens, and a conventional camera body. The image forming apparatus described in the embodiment may then be assembled by the cameraman using as the first optical system, a lens with whose characteristics he is familiar. The adaptor will be provided with connecting means suited to the conventional lens mounts used on camera bodies and lenses, to enable the adaptor to be inserted between the lens and camera body without modification of these items.

An image erector, such as an erecting prism or mirror arrangement, may form part of the adaptor if required.

Conventional movie film has a frame format wherein the picture area of each frame is rectangular, with an aspect ratio of 1.175:1, and has its major dimension in the transverse direction of the film stock. Moreover, conventional cinematographic projection equipment runs the film through the projector along a vertical path, and the projected image has a "landscape" orientation. To produce a wide-screen format, in which the aspect ratio of the projected image is 2.35:1 and the image is arranged in a "landscape" orientation, an anamorphic lens is conventionally used to capture a wide-screen image of aspect ratio 2.35:1 and compress the image laterally to fit into the 1.175:1 aspect ratio frame area of the film.

The image is reduced in width to half its original width, but its height is unchanged. Anamorphic lenses are needed in both the camera and the projector in the cinematographic field, and are expensive to produce. In the field of television, image processing software can produce a wide-angle image from a conventional CCD onto which a widescreen image has been compressed by an anamorphic lens, but investment in the image processing is required and the camera lens is expensive. In a further development of the invention, the fibre optic plate may be formed from a coherent bundle of fibres, but the front and rear faces of the plate may have different aspect ratios. Such a fibre optic plate 90 is shown in perspective view in figure 6A. Figure 6B shows a vertical section through the plate 90 of figure 6A in the plate B-B, and figure 6C shows a horizontal section through the plate 90 in the plane C-C. The front face 91 of the plate 90 has a height h₁ and a width w₁, whereas the rear face 92 has a height h₂ and a width w₂. As can be seen from figure 6A, the longer sides 93 of the front face 91 of the fibre optic bundle extend in directions generally parallel to the shorter sides 94 of the rear face 92 of the fibre optic bundle. Furthermore, if the arrays of fibres on the respective faces have the same numbers of rows and columns, each fibre in the fibre optic plate may have an entry end at the front face of the plate whose dimensions are submultiples of h₁ and w₁, while the dimensions of the exit ends of the fibres are the same submultiples of h₂ and w₂.

In the plate 90 of Figure 6, the rear face 92 has a different height h₂ from the height h₁ of the front face. It is to be understood that h₂ may be greater or smaller than h₁, or may be equal to h₁. To produce the lateral compression necessary to reduce an image of aspect ratio 2.35:1 so as to fit onto film whose frames have an aspect ratio of 1.135:1, the plate 90 is dimensioned so that h₂ is equal to h₁, and w₁ is twice w₂. As previously described, the fibre optic plate may be composed of an elongate flexible bundle of fibres to enable the lens to be directed at a subject without having to move the camera body, and the fibre optic bundle may have entry and exit planes of different aspect ratios. The entry and exit planes of the fibre optic bundle may be in parallel planes facing in opposite directions; for example the bundle may be generally "S" or "Z" shaped. Alternatively, the entry and exit planes may face in the same direction, for example in the case of a "C" shaped bundle. Such arrangements enable the optical axis of the lens arrangement to be "folded" to reduce the overall size of the lens.

## Claims

1. An image forming apparatus comprising a first optical system for forming on a first image surface a first real image of a first image size and having a depth of focus, and a second optical system which has as its object the first image, and which is capable of forming at a second image plane a second image of a size different from the first image but preserving the depth of focus.

2. An image forming apparatus according to claim 1, wherein the second image is smaller than the first image.

3. An image forming apparatus according to claim 1, wherein the second image is larger than the first image.

4. Apparatus according to any preceding claim, comprising a light transmitting element having a front face and a rear face, wherein the first image is formed by light incident on the front face of the light transmitting element, and wherein the first image is viewable on the rear face of the light transmitting element to serve as the object for the second optical system.

5. Apparatus according to claim 4, wherein the light transmitting element is a fibre optic element having an input face and an output face positioned between the first and second optical systems, the first image surface being coincident with the input face of the fibre optic element, and the output face of the fibre optic element coinciding with the object plane of the second optical system.

6. Apparatus according to claim 5, wherein the fibre optic element is twisted to rotate the image between its input and output faces.

7. Apparatus according to claim 6, wherein the image is inverted.

8. Apparatus according to any of claims 5 to 7, wherein the fibre optic element is an elongate, flexible and coherent fibre optic bundle.

9. Apparatus according to claim 5 wherein the front face of the light transmitting element is generally rectangular and has a first aspect ratio between the lengths of its longer and shorter sides, and wherein the rear face of the light transmitting element is generally rectangular and has a second aspect ratio between the lengths of its longer and shorter sides.

10. Apparatus according to claim 9 wherein the longer sides of the front face of the light transmitting element extend generally parallel to the shorter sides of the rear face of the light transmitting element.

11. Apparatus according to claim 9 wherein the longer sides of the front face of the light transmitting element extend generally parallel to the longer sides of the rear face of the light transmitting element.

12. Apparatus according to claim 9 wherein the aspect ratio of the width to the height of the front face of the light transmitting element is 2.35:1, and the aspect ratio of the width to the height of the rear face of the light transmitting element is 1.175:1.

13. Apparatus according to claim 4, wherein the first image surface is a matt face of a transparent plate.

14. Apparatus according to claim 13, wherein the plate is a ground glass plate.

15. Apparatus according to claim 13, wherein the first image surface is formed by a translucent matt coating on a smooth surface.

16. Apparatus according to claim 15, wherein the matt coating is phosphorescent or fluorescent.

17. Apparatus according to any of claims 1 to 3, wherein the first image surface is a face of an opaque element, and the second optical system collects light emitted from the face.

18. Apparatus according to claim 17, wherein the face is treated with a fluorescent or phosphorescent material.

19. Apparatus according to claim 18, wherein the fluorescent or phosphorescent material is sensitive to visible light.

20. Apparatus according to claim 18, wherein the fluorescent or phosphorescent material is sensitive to invisible infra-red or ultra-violet light.

21. Apparatus according to any of claims 17 to 20, including a semi-reflective element through which light passing from the first optical system to the first image surface passes, and which acts to reflect light from the first image to the second optical system.

22. Apparatus according to claim 21, wherein the semi-reflective element is half silvered mirror.

23. Apparatus according to claim 21, wherein the semi reflective element is a prism.

24. Apparatus according to any of claims 1 to 5 or 13 to 23, wherein image erecting means is provided in the optical path between the first optical system and the second image.

25. Apparatus according to claim 24, wherein the image erecting means is positioned between the first image surface and the second optical system.

26. Apparatus according to claim 24 or claim 25, wherein the image erecting means is an erecting prism

27. A lens system for a camera, comprising a first lens system having adjustable angle of view and aperture, an intermediate image forming element, and a second lens system having variable magnification, wherein the first lens system is capable of forming a first real image having a depth of focus on the intermediate image forming element, and the second lens system is capable of forming a final image of a predetermined size from the first image, and preserving the depth of focus of the first image in the final image.

28. A lens system according to claim 27, wherein the intermediate image forming element is a fibre optic element.

29. A lens system according to claim 28, wherein the fibre optic element has an input face and an output face positioned between the first and second lens systems, the first lens system being capable of forming an image on the input face of the fibre optic element, and the output face of the fibre optic element coinciding with the object plane of the second lens system.

30. A lens system according to claim 29, wherein the fibre optic element is an elongate flexible coherent fibre optic bundle.

31. A lens system according to claim 29 or claim 30, wherein the fibre optic element rotates the image.

32. A lens system according to claim 29 or claim 30 wherein the front face of the fibre optic element is generally rectangular and has a first aspect ratio between the lengths of its longer and shorter sides, and wherein the rear face of the fibre optic element is generally rectangular and has a second aspect ratio between the lengths of its longer and shorter sides different from the first aspect ratio.

33. A lens system according to claim 32 wherein the longer sides of the front face of the fibre optic element extend generally parallel to the shorter sides of the rear face of the fibre optic element.

34. A lens system according to claim 32 wherein the longer sides of the front face of the fibre optic element extend generally parallel to the longer sides of the rear face of the fibre optic element.

35. A lens system according to claim 34 wherein the aspect ratio of the width to the height of the front face of the fibre optic element is 2.35:1, and the aspect ratio of the width to the height of the rear face of the fibre optic element is 1.175:1.

36. A lens system according to claim 27, wherein the intermediate image forming element is a transparent plate having a matt surface.

37. A lens system according to claim 27, wherein the intermediate image forming element is a smooth transparent plate having a matt translucent coating.

38. A lens system according to claim 27, wherein the plate is a ground glass plate.

39. A lens system according to claim 27, wherein the intermediate image forming element is a matt surface of an opaque element.

40. A lens system according to claim 39, wherein the surface is treated with a matt coating.

41. A lens system according to claim 37 or claim 40, wherein the coating is of a fluorescent or phosphorescent material.

42. A lens system according to claim 41, wherein the fluorescent or phosphorescent material is sensitive to visible light.

43. A lens cystem according to claim 41, wherein the fluorescent or phosphorescent material is sensitive to invisible infra-red or ultra violet radiation.

44. A lens system according to any of claims 39 to 43 wherein light from the first lens system passes through a semi-reflecting element to the intermediate image forming element, and is reflected by the semi-reflecting element as it passes from the intermediate image forming element to the second lens system.

45. A lens system according to claim 44, wherein the semi-reflecting element is a half-silvered mirror.

46. A lens adaptor for a camera having a camera body having an image capture element and a lens attachable to the camera body by cooperating mounting portions on the lens and body, the lens adaptor comprising an intermediate image forming element and an optical system and including coupling portions cooperable with the coupling portions of the camera and the lens respectively, the arrangement being such that the adaptor is attachable to the camera body and the lens is attachable to the adaptor so that the lens is capable of forming an intermediate image having a depth of focus on the intermediate image forming element of the adaptor, and the optical system of the adaptor is capable of forming a final image having the said depth of focus on the image capture element of the camera.

47. An adaptor according to claim 46, wherein the intermediate image forming element is a fibre optic element.

48. An adaptor according to claim 47, wherein the fibre optic element is an elongate flexible coherent fibre optic bundle.

49. An adaptor according to claim 47 or claim 48, wherein the fibre optic element rotates the image.

50. An adaptor according to claim 47 or claim 48 wherein the front face of the fibre optic element is generally rectangular and has a first aspect ratio between the lengths of its longer and shorter sides, and wherein the rear face of the fibre optic element is generally rectangular and has a second aspect ratio between the lengths of its longer and shorter sides different from the first aspect ratio.

51. An adaptor according to claim 50 wherein the longer sides of the front face of the fibre optic element extend generally parallel to the shorter sides of the rear face of the fibre optic element.

52. An adaptor according to claim 50 wherein the longer sides of the front face of the fibre optic element extend generally parallel to the longer sides of the rear face of the fibre optic element.

53. An adaptor according to claim 52 wherein the aspect ratio of the width to the height of the front face of the fibre optic element is 2.35:1, and the aspect ratio of the width to the height of the rear face of the fibre optic element is 1.175:1.

54. An adaptor according to claim 46, wherein the intermediate image forming element is a transparent plate having a matt surface.

55. An adaptor according to claim 54, wherein the intermediate image forming element is a smooth transparent plate having a matt translucent coating.

56. An adaptor according to claim 55, wherein the plate is a ground glass plate.

57. An adaptor according to claim 46, wherein the intermediate image forming element is a matt surface of an opaque element.

58. An adaptor according to claim 57, wherein the surface is treated with a matt coating material.

59. An adaptor according to claim 55 or claim 57 wherein the coating is of a fluorescent or phosphorescent material.

60. An adaptor according to claim 59, wherein the fluorescent or phosphorescent material is sensitive to visible light.

61. An adaptor according to claim 59, wherein the fluorescent or phosphorescent material is sensitive to invisible infra-red or ultra violet radiation.

62. A camera having a lens system according to any of claims 27 to 45, capable of forming a final image on an image receptor.

63. A camera according to claim 62, wherein the image receptor is a photographic film.

64. A camera according to claim 62, wherein the image is an electronic image capture element.

65. A method of forming an image having a predetermined size, viewing angle and depth of field on an image capture element, comprising the steps of:
forming an intermediate image having the predetermined angle of view and depth of field on an intermediate image surface by means of a first optical system; and
forming a final image by magnifying or reducing the intermediate image, in a second optical system which has the intermediate image as its object, to form a final image of the predetermined size on the image capture element.

66. A method according to claim 65, wherein the image capture element is a photographic film.

67. A method according to claim 65, wherein the image capture element is a CCD element.

68. A method according to any of claims 65 to 67, further including the step of inverting the image.

69. A method according to any of claims 65 to 67, wherein the intermediate image surface is one end face of a fibre optic bundle, and the other end face of the fibre optic bundle serves as the object for the second optical system.

70. A method according to claim 69 wherein the front face of the fibre optic bundle is generally rectangular and has a first aspect ratio between the lengths of its longer and shorter sides, and wherein the rear face of the fibre optic bundle is generally rectangular and has a second aspect ratio between the lengths of its longer and shorter sides different from the first aspect ratio.

71. A method according to claim 70 wherein the longer sides of the front face of the fibre optic bundle extend generally parallel to the shorter sides of the rear face of the fibre optic bundle.

72. A method according to claim 70 wherein the longer sides of the front face of the fibre optic bundle extend generally parallel to the longer sides of the rear face of the fibre optic bundle.

73. A method according to claim 72 wherein the aspect ratio of the width to the height of the image formed on the front face of the fibre optic bundle is 2.35:1, and the aspect ratio of the width to the height of the image formed on the rear face of the fibre optic bundle is 1.175:1.

74. A method according to any of claims 65 to 68, wherein the intermediate image surface is a matt surface of a transparent plate.

75. A method according to any of claims 65 or claim 68, wherein the intermediate image is formed on a matt surface of an opaque element.
